# EUROPÄISCHE PATENTSCHRIFT

(11) **EP 3 330 548 B1**
(45) Veröffentlichungstag und Bekanntmachung des Hinweises auf die Patenterteilung: **20.01.2021**
(21) Anmeldenummer: 16201497.1
(22) Anmeldetag: 30.11.2016
(51) Int. Cl.: F16B 11/00, F16B 37/04

(54) **BEFESTIGUNGSELEMENT UND VERFAHREN ZU DESSEN HERSTELLUNG**
FIXING ELEMENT AND METHOD FOR ITS PRODUCTION
ÉLÉMENT DE FIXATION ET SON PROCÉDÉ DE FABRICATION

(43) Veröffentlichungstag der Anmeldung: 06.06.2018
(73) Patentinhaber: Newfrey LLC, New Britain, CT 06053 (US)
(72) Erfinder: Gramsch-Kempkes, Sascha, 35394 Giessen (DE)
(74) Vertreter: SBD IPAdmin

(56) Entgegenhaltungen:
- EP-A2- 0 219 217
- DE-A1-102007 021 800
- DE-A1-102011 102 378
- DE-A1-102012 021 210
- JP-A- H05 331 915
- US-A1- 2009 130 361
- US-A1- 2013 175 730

## Beschreibung

### Gebiet der Erfindung

Die vorliegende Erfindung betrifft ein Befestigungselement mit vorappliziertem Fügematerial, und ein Verfahren zu dessen Herstellung.

### Hintergrund der Erfindung

Auf dem Gebiet der Technik des Fügens von Befestigungselementen auf Werkstücke ist es bspw. bekannt, metallische Bolzen auf metallische Werkstücke zu schweißen. Dieses als "Bolzenschweißen" bekannte Verfahren wird insbesondere in der Automobilindustrie eingesetzt, um Bolzen auf Karosseriebleche zu schweißen, wobei an den Bolzen anschließend Befestigungsclips aus Kunststoff befestigt werden, an denen Kabel, Leitungen etc. festgelegt werden.

Aufgrund der Tatsache, dass beispielsweise im Karosseriebau von Kraftfahrzeugen vermehrt weniger gut schweißbare bzw. nichtmetallische Verbundmaterialien eingesetzt werden, wie Kunststoffe, Faserverbundbauteile, etc., hat die Klebetechnik sich als Fügeverfahren insbesondere im Karosseriebau etabliert. Anstatt die Bolzen auf Werkstücke zu schweißen, werden diese aufgeklebt.

Das Dokument DE102014118973 offenbart ein Befestigungselement mit einer Fügefläche, die einen Auftragungsbereich aufweist. Ein Fügematerial (bzw. ein Klebstoff) überdeckt zumindest teilweise den Auftragungsbereich. Der Klebstoff wird in der Regel erwärmt aufgetragen und dann wieder erkaltet. Das so hergestellte Befestigungselement wird dann mit dem Klebstoff transportiert, bspw. von einem Ort der Herstellung zu einem Ort, an dem das Befestigungselement auf eine Trägerfläche eines Werkstücks, wie z.B. ein Karosserieblech zu kleben ist. EP0219217 offenbart ein Element mit vorappliziertem Fügematerial auf eine Fläche, wobei das Fügematerial ein erstes Klebstoffmaterial und ein zweites anderes Klebstoffmaterial aufweisen kann. Das zweites Klebstoffmaterial wird entfernt von dem ersten Klebstoffmaterial appliziert. In einem anderen Ausführungsform offenbart EP0219217 ein passiv material, um das Fügematerial einzukapseln.

Bei Lagerung und Transport ist es wichtig, eine unerwünschte chemische Vernetzungsreaktion des Fügematerials vor dem eigentlichen Klebeprozess zu vermeiden. Um diese unerwünschte chemische Vernetzungsreaktion des Fügematerials zu vermeiden, wird heutzutage eine Kühlkette benutzt. Beispielsweise werden die Befestigungselemente in Kühlboxen gelagert und transportiert. Im Wesentlichen, wird das Befestigungselement tiefgekühlt gelagert und auch gekühlt transportiert, um eine mehrmonatige Lagerzeit zu gewährleisten.

Das Nutzen von Kühlketten ist besonders aufwendig und teuer. Eine Temperaturüberwachung kann notwendig sein und es besteht ein Risiko, dass die Kühlkette während der Lagerung und/oder des Transports unterbrochen wird.

Der vorliegenden Erfindung liegt daher die Aufgabe zugrunde, ein verbessertes Befestigungselement und ein verbessertes Verfahren zu dessen Herstellung anzugeben, das vorzugsweise eine unerwünschte chemische Vernetzungsreaktion des Fügematerials vor dem eigentlichen Klebeprozess vermeidet, das gute Fügeergebnisse erlaubt und das einfach herzustellen ist.

### Zusammenfassung der Erfindung

Die oben genannte Aufgabe wird gelöst durch ein Befestigungselement, das mit einem Werkstück fügbar ist, mit den Merkmalen von Anspruch 1.

Das Fügematerial mit zwei verschiedene und getrennte Klebstoffmaterialen erlaubt einen stabilen Zustand des Befestigungselements. Nur das erste Klebstoffmaterial ist von außen sichtbar und hat erfindungsgemäß einen festen Zustand Das zweite Klebstoffmaterial ist zwischen dem Auftragungsabschnitt und dem ersten Klebstoffmaterial eingeschlossen und während der Lagerung oder des Transports wird eine Mischung des ersten und zweiten Klebstoffmaterials vermieden, was auch eine unerwünschte chemische Vernetzungsreaktion des Fügematerials vor dem eigentlichen Klebeprozess vermeidet. Die Mischung des ersten und zweiten Klebstoffmaterials findet direkt vor Ort, an dem das Befestigungselement auf eine Trägerfläche eines Werkstücks, wie z.B. ein Karosserieblech, zu kleben ist, statt.

Gemäß einer weiteren bevorzugten Ausführungsform ist das zweite Klebstoffmaterial flüssig und/oder pastös und/oder zäh (fest). Da das zweite Klebstoffmaterial zwischen dem Auftragungsabschnitt und dem ersten Klebstoffmaterial eingeschlossen ist, kann es verschiedene Zustände aufweisen und insbesondere flüssig oder pastös sein, ohne zu einem Verlust des Fügematerials (während der Lagerung und/oder des Transports) zu führen.

In einer bevorzugten Ausführungsform ist das erste Klebstoffmaterial ein Klebstoffharz. Ein Klebstoffharz kann einen festen Zustand haben und gut auf der Auftragungsfläche des Befestigungselements halten. In einer weiteren bevorzugten Ausführungsform ist das erste Klebstoffmaterial ein Epoxidharz. Epoxidharz ist vorteilhaft, weil es eine gute Schutzschicht ausbildet und sich gut mischt. Ferner ist die hohe realisierbare Klebfestigkeit von Epoxidharz vorteilhaft.

In einer bevorzugten Ausführungsform ist das zweite Klebstoffmaterial ein Klebstoffhärter.

In einer bevorzugten Ausführungsform ist das zweite Klebstoffmaterial ein Beschleuniger.

In einer besonders bevorzugten Ausführungsform sind das erste Klebstoffmaterial und das zweite Klebstoffmaterial durch eine Trennschicht getrennt. Die Trennschicht bildet eine physische Grenze zwischen dem ersten Klebstoffmaterial und dem zweiten Klebstoffmaterial, was die unerwünschte Mischung der beiden Materialen noch besser vermeidet.

Gemäß einer weiteren bevorzugten Ausführungsform weist das Fügematerial eine Vernetzungtemperatur auf, und die Trennschicht einen Schmelzpunkt, die kleiner als der Vernetzungstemperatur ist. Die Trennschicht löst sich vor dem Anfang der Vernetzung des Fügematerials.

Erfindungsgemäß ist die Trennschicht eine Silikatschicht.

In einer bevorzugten Ausführungsform weist der Auftragungsabschnitt eine Ringnut auf, und das erste Klebstoffmaterial erstreckt sich in der Ringnut. Die Ringnut hält das erste Klebstoffmaterial.

In einer anderen bevorzugten Ausführungsform weist der Auftragungsabschnitt eine Ringnut auf, und das zweite Klebstoffmaterial erstreckt sich in der Ringnut. Die Ringnut hält das zweite Klebstoffmaterial. Das erste Klebstoffmaterial haftet dann am zweiten Klebstoffmaterial.

In einer bevorzugten Ausführungsform bildet das Fügematerial einen kreisförmigen Fügematerialstrang mit einer Innenwand aus, die eine zentrale Öffnung begrenzt.

Ferner wird die obige Aufgabe gelöst durch ein Verfahren zum Herstellen eines Befestigungselements mit den in Anspruch 9 definierten Schritten.

Die Herstellung eines Befestigungselements nach diesem Verfahren ist einfach.

In einer bevorzugten Ausführungsform beinhalte das Verfahren ein Erkalten des Fügematerials. Das Erkalten des Fügematerials ist vorzugsweise möglichst zügig.

### Beschreibung der begleitenden Zeichnungen

Ausführungsbeispiele der Erfindung sind in den Zeichnungen dargestellt und werden in der nachfolgenden Beschreibung näher erläutert. Es zeigen:
Fig. 1 eine schematische Querschnittansicht eines erfindungsgemäßen Befestigungselements;
Fig. 2 eine schematische Querschnittansicht eines erfindungsgemäßen Befestigungselements gemäß einer alternativen Ausführungsform;
Fig. 3 die schematischen Schritte eines Verfahrens zum Herstellen des Befestigungselements von Fig. 1;
Fig. 4 die schematischen Schritte eines Verfahrens zum Herstellen des Befestigungselements von Fig. 2;
Fig. 5a bis Fig. 5c mehrere schematische Darstellungen eines Auftragungsabschnitts mit dem zweiten Klebstoffmaterialen;
Fig. 6A eine Ansicht eines erfindungsgemäßen Befestigungselements mit dem Fügematerial gemäß einer Ausführungsform;
Fig. 6B eine Ansicht eines erfindungsgemäßen Befestigungselements mit dem Fügematerial gemäß einer alternativen Ausführungsform.

### Detaillierte Beschreibung bevorzugter Ausführungsformen vorliegender Erfindung

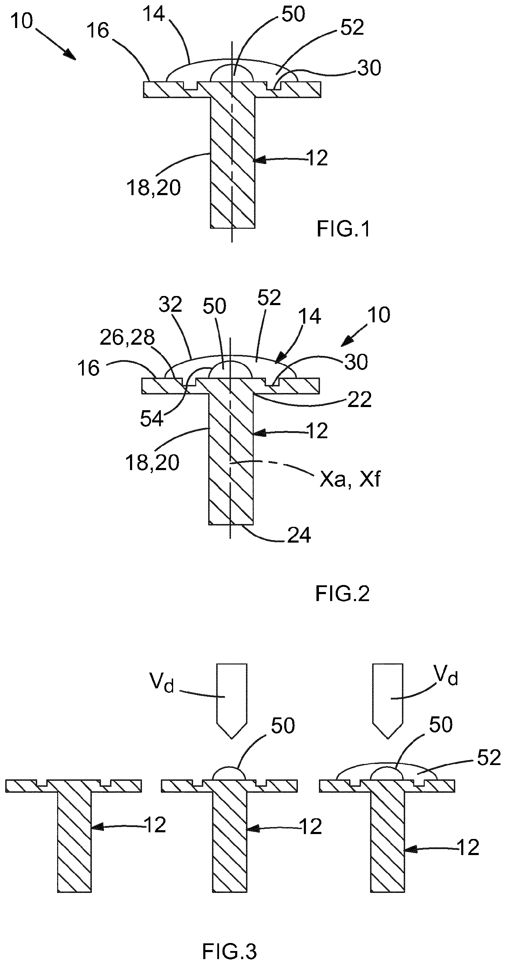

Fig. 1 stellt eine Ausführungsform eines Befestigungselements 10 schematisch im Längsschnitt dar. Das Befestigungselement weist ein Fügebauteil 12 und ein auf das Fügebauteil 12 vorappliziertes Fügematerial 14 auf.

Das Fügebauteil 12 weist einen Flanschabschnitt 16 und einen schaftförmigen Ankerabschnitt 18 auf. Das Fügebauteil 12 ist einstückig.

In einer anderen Ausführungsform kann das Fügebauteil 12 zweiteilig sein. In diesem Fall sind beispielsweise der Flanschabschnitt und der schaftförmige Ankerabschnitt zwei verschiedene Teile, die zusammen verbunden werden.

Der Ankerabschnitt 18 weist einen Grundkörper 20, eine erste und eine zweite Endportion 22, 24 auf. Der Grundkörper 20 erstreckt sich entlang einer Ankerachse Xa zwischen der ersten Endportion 22 und der zweiten Endportion 24. Der Grundkörper 20 des Ankerabschnitts 18 kann jeweils die gewünschte Schaftform annehmen. Wie in Fig. 1 dargestellt, kann der Grundkörper 20 einen kreisförmigen Querschnitt haben, im Wesentlichen konstant über seine Länge. In anderen Ausführungsformen könnte der Ankerabschnitt auch einen rechteckigen, dreieckigen, ... Querschnitt haben. Ebenfalls in anderen Ausführungsformen könnte der Grundkörper nicht konstant über seine Länge sein.

Die zweite Endportion 24 des Ankerabschnitts 18 ist vorzugsweise rund, aber andere Formen von Endportionen könnten vorgesehen sein. Zum Beispiel kann die zweite Endportion mit geschnittener Kante vorgesehen sein.

Der Ankerabschnitt 18 ist vorzugsweise aus Stahl. Andere Metalle wie zum Beispiel Aluminium oder andere Materialien können ebenfalls benutzt werden.

Der Flanschabschnitt 16 erstreckt sich von der ersten Endportion 22. Der Flanschabschnitt 16 ist beispielweise kreisförmig und konzentrisch zu einer Flanschachse Xf ausgerichtet.

Das Fügebauteil 12 weist eine Fügefläche 26 auf. Diese Fügefläche 26 ist vorzugsweise aus einem metallischen Werkstoff. Die Fügefläche 26 ist beispielsweise auf dem Flanschabschnitt 16 vorgesehen. Die Fügefläche 26 weist einen Auftragungsabschnitt 28 auf. Der Auftragungsabschnitt 28 ist geeignet, um ein Fügematerial zu empfangen. Eine retentive Oberflächenstruktur mit Materialhinterschneidungen 32 bildenden Erhebungen ist zum Beispiel auf dem Auftragungsabschnitt 28 ausgebildet. Die Herstellung von Materialhinterschneidungen 32 auf der Fügefläche 26 ist vorzugsweise in DE102014118973 beschrieben.

Eine Ringnut 30 kann auch zusätzlich oder alternativ in dem Flanschabschnitt 16 (bzw. in dem Auftragungsabschnitt 28 des Fügebauteils 12) vorgesehen sein (siehe Fig. 1). Die Ringnut weist beispielsweise eine radial innen liegende Innenwand und eine radial außen liegende Außenwand auf. Die Ringnut kann konzentrisch zu der Flanschachse Xf ausgerichtet sein. Die Tiefe der Ringnut ist vorzugsweise größer als das 0,1-fache der Höhe des Flanschabschnitts 16 und kleiner als das 0,5-fache der Höhe des Flanschabschnitts 16.

Der Auftragungsabschnitt 28 (beispielsweise mit Materialhinterschneidungen 32 und/oder Ringnut 30) wird mit einem Fügematerial 14, überdeckt. Das Fügematerial 14 ist ein Klebstoff, der auf den Auftragungsabschnitt 28 (bzw. auf die Fügefläche) aufgebracht wird. Das Fügematerial kann ein Klebstofftropfen oder ein kreisförmiger Klebstoffstrang sein, aber andere Formen können auch vorgesehen sein.

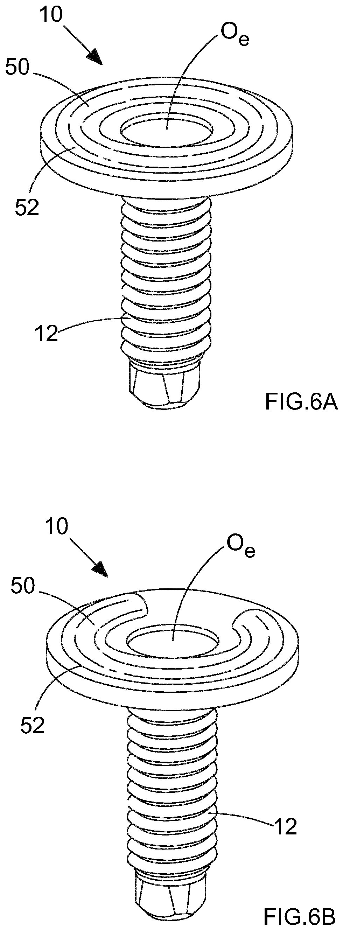

Wie in Fig. 6A und Fig. 6B dargestellt, kann das Fügematerial einen kreisförmigen (oder ringförmigen) Fügematerialstrang ausbilden. Der kreisförmige Fügematerialstrang kann um die Ankerachse zentriert sein, oder bezüglich der Ankerachse versetzt sein. Der kreisförmige Fügematerialstrang ist mit einer Innenwand, die eine zentrale Öffnung Oe begrenzt. Der kreisförmige Fügematerialstrang kann einen halbkreisförmigen Querschnitt haben. Das Fügematerial kann einen durchgehenden kreisförmigen Strang ausbilden, wie in Fig. 6A dargestellt, oder eine einmal oder mehrmals unterbrochenen Strang ausbilden. In Fig. 6B bildet das Fügematerial einen Kreisbogen aus, mit zwei Ende, die entfernt voneinander sind. Beispielsweise eine Aufnahme ist in der zentralen Öffnung Oe vorgesehen.

Das Fügematerial weist ein erstes und ein zweites anderes Klebstoffmaterial auf. Das zweite Klebstoffmaterial wird auf dem Auftragungsabschnitt 28 aufgetragen und das erste Klebstoffmaterial überdeckt das zweite Klebstoffmaterial. Das zweite Klebstoffmaterial ist zwischen dem Auftragungsabschnitt 28 und dem ersten Klebstoffmaterial eingeschlossen.

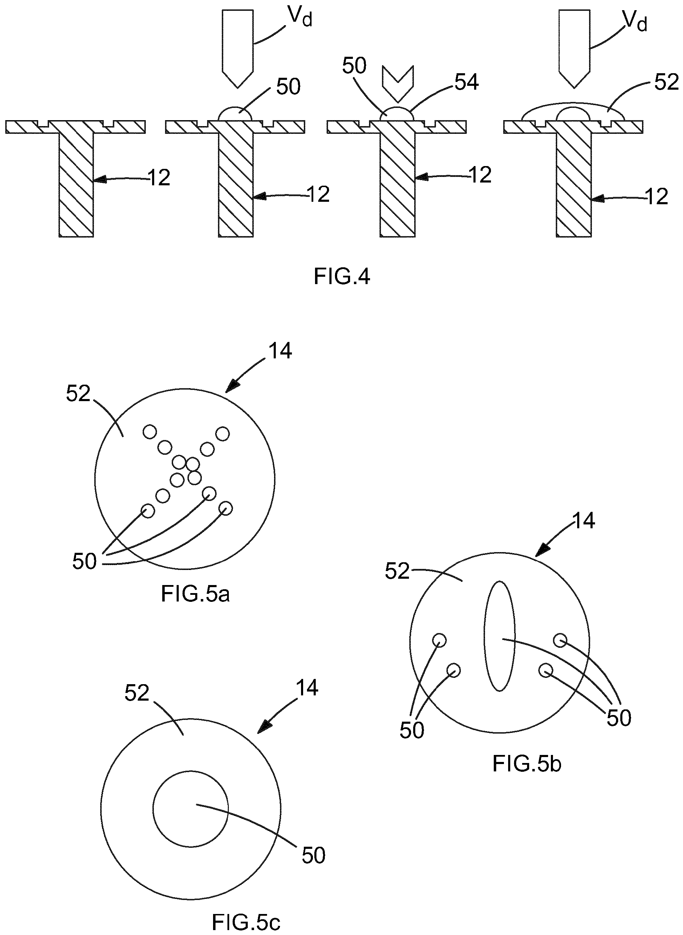

Wie in Fig. 1 und 2 dargestellt, kann das zweite Klebstoffmaterial zentriert auf dem Flanschabschnitt sein. Das zweite Klebstoffmaterial kann eine Tropfenform haben, aber andere Formen sind auch möglich. Vorzugsweise kann das zweite Klebstoffmaterial, wie in Fig. 5 a) bis c) dargestellt, aus mehreren Tropfen bestehen, die alle von dem ersten Klebstoffmaterial überdeckt werden. Die Tropfen können rund oder länglich ausgebildet sein (siehe Fig. 5b)). Das zweite Klebstoffmaterial kann auch mit einem besonderen Muster wie ein Kreuz (Fig. 5a)), U- oder L- förmig auf dem Auftragungsabschnitt aufgetragen sein.

Fig. 5 a) bis c) stellen mehrere schematische Darstellungen eines Auftragungsabschnitts mit dem zweiten Klebstoffmaterialen 50 dar. Mehrere Tropfen von dem zweiten Klebstoffmaterialen 50 können auf dem Auftragungsabschnitt aufgebracht werden, um beispielsweise ein Muster darzustellen. Der Volume von den Tropfen kann gleich sein, wie in Fig. 5 a) dargestellt, oder anders sein, wie in Fig. 5b) dargestellt. Mehrere Tropfen oder nur ein Tropfen (siehe Fig. 5c) können beispielsweise vorgesehen sein. Das zweite Klebstoffmaterialen 50 wird dann bei dem ersten Klebstoffmaterialen 52 überdeckt mit einem anderen oder mit dem gleichen Muster.

Das zweite Klebstoffmaterial ist beispielsweise einen Klebstoffhärter. Das zweite Klebstoffmaterial kann auch ein Beschleuniger sein. Das zweite Klebstoffmaterial wird das erste Klebstoffmaterial (beispielsweise ein Epoxidharz) härten. Das zweite Klebstoffmaterial kann flüssig, pastös oder fest sein. Allgemein wird das zweite Klebstoffmaterial die Vernetzung eines ersten Klebstoffmaterials (z.B eines Epoxidharzes) über Polyadditions-oder Polymerisationsreaktion bewirken. Das Volumen des zweiten Klebstoffmaterials kann von der Geometrie des Fügebauteils und/oder des Auftragungsabschnitt abhängen.

Das zweite Klebstoffmaterial ist, wie bereits beschrieben, von dem ersten Klebstoffmaterial überdeckt. Das erste Klebstoffmaterial, das das zweite Klebstoffmaterial einschließt, kann ein Epoxidharz sein. Das Epoxidharz weist unterhalb der Vernetzungstemperatur einen festen Aggregatszustand auf und ist unter Wärmezufuhr aufschmelzbar.

Das erste Klebstoffmaterial ist von außen sichtbar, während das zweite Klebstoffmaterial von außen nicht sichtbar ist. Das Volumen des ersten Klebstoffmaterials ist von dem Volumen des zweiten Klebstoffmaterials abhängig. Das erste und zweite Klebstoffmaterial können beispielsweise konzentrisch zueinander angeordnet sein. Das zweite Klebstoffmaterial bildet den Kern des Fügematerials vor dem Klebeprozess aus. Das zweite Klebstoffmaterial 50 ist beispielsweise in der Mitte des ersten Klebstoffmaterials angeordnet.

Das erste Klebstoffmaterial 52 ist nach außen angeordnet. Das erste Klebstoffmaterial 52 erstreckt sich beispielsweise, wie in Fig. 1 dargestellt, in der Ringnut 30. In anderen Ausführungsformen kann das zweite Klebstoffmaterial 50 sich in der Ringnut 30 erstecken. In einer weiteren Ausführungsform können sowohl erstes als auch zweites Klebstoffmaterial sich in der Ringnut 30 erstecken.

In Fig. 6A und Fig. 6B ist das zweite Klebstoffmaterial 50 (bzw. der Klebstoffhärter) in Form eines kreisförmigen Strangs aufgebracht. Das erste Klebstoffmaterial 52 ist dann auch in Form eines kreisförmigen Strangs aufgebracht, um das zweite Klebstoffmaterial 50 zu überdecken. Eine solche Fügematerialanordnung erlaubt eine gute Mischung und eine gute Verteilung des Fügematerials. Der Klebstoffstrang ist vorzugsweise von der Außenfläche des Flanschabschnitts 16 entfernt. Das zweite Klebstoffmaterial 50 ist in der Mitte des ersten Klebstoffmaterials 52 angeordnet. Das zweite Klebstoffmaterial 50 und/oder das erste Klebstoffmaterial 52 haben beispielsweise einen halbkreisförmigen Querschnitt. Das zweite Klebstoffmaterial 50 bildet den Kern des Fügematerials aus.

Fig. 3 stellt Verfahrensschritte zum Herstellen des Befestigungselementes schematisch dar (von links bis rechts).

Zunächst wird das Fügebauteil bereitgestellt (Fig. 3 links).

In einem zweiten Schritt wird das gewünschte Volumen des zweiten Klebstoffmaterials 50 auf dem Flanschabschnitt 16 appliziert. Das gewünschte Volumen entspricht beispielsweise einem Tropfen. Vorzugsweise wird das zweite Klebstoffmaterial 50 durch einen Volumendosierer Vd auf dem Flanschabschnitt 16 appliziert. Der Volumendosierer Vd kann mit oder ohne automatischer Materialführung eingesetzt werden. Das zweite Klebstoffmaterial 50 ist beispielsweise im Verarbeitungszustand bei Erwärmung auf beispielsweise ca. 80 °C flüssig. Das zweite Klebstoffmaterial 50 kann beim Abkühlen beispielsweise pastös werden. Insbesondere kann das zweite Klebstoffmaterial 50 beim Abkühlen nicht fest werden.

In einem dritten Schritt wird das erste Klebstoffmaterial über das zweite Klebstoffmaterial aufgetragen, so dass das erste Klebstoffmaterial das zweite Klebstoffmaterial vollständigt überdeckt. Vorzugsweise wird das erste Klebstoffmaterial 52 durch einen Volumendosierer Vd auf dem Flanschabschnitt 16 appliziert. Der Volumendosierer kann mit oder ohne automatischer Materialführung eingesetzt werden. Das erste Klebstoffmaterial wird durch Erwärmung vor dem Applizieren verflüssigt. Das verflüssigte erste Klebstoffmaterial fließt um und über das zweite Klebstoffmaterial. Nach dem Erstarren bildet das erste Klebstoffmaterial eine feste, nicht klebrige Schutzhülle um das zweite Klebstoffmaterial (das vorzugsweise pastös sein kann). Gleichzeitig verklammert das erste Klebstoffmaterial in der Ringnut oder der retentiven Oberflächenstruktur und wird verliersicher auf dem Flanschabschnitt gehalten. In einer anderen Ausführungsform kann das zweite Klebstoffmaterial die Ringnut ausfüllen. Das erste Klebstoffmaterial haftet dann ausreichend.

Wie in Fig. 2 dargestellt, ist erfindungsgemäß eine Trennschicht 54 zwischen dem ersten Klebstoffmaterial und dem zweiten Klebstoffmaterial vorgesehen Die Trennschicht 54 wird auf das zweite Klebstoffmaterial aufgetragen und überdeckt das zweite Klebstoffmaterial.

Die Trennschicht 54 bildet eine physische Grenze zwischen dem ersten und zweiten Klebstoffmaterial, um die unerwünschte Mischung der beiden Klebstoffmaterialen zu vermeiden.

Fig. 4 (von links bis rechts) stellt Verfahrensschritte zum Herstellen des Befestigungselementes mit einer Trennschicht schematisch dar. Das in Fig. 4 dargestellte Verfahren besteht aus einem Schritt mehr als das aus Fig. 3. Nach dem Auftragen des zweiten Klebstoffmaterials wird die Trennschicht auf das zweite Klebstoffmaterial aufgetragen.

Die Trennschicht 54 kann auf das zweite Klebstoffmaterial 50 durch eine Beflammung mit einem Siliziumdioxid (SiO2, z.B. Pyrosil®) aufgebracht werden. Die Trennschicht 54 ist dann eine Silikatschicht. Eine Brennflamme wird vorzugsweise zügig über das zweite Klebstoffmaterial 50 geführt. Eine nur wenige Nanometer dicke aber dichte Silikatschicht scheidet sich beispielsweise auf dem Klebstoffhärter 50 ab und ermöglicht eine physische Trennung zum anschließend aufgetragenen Klebstoffharz 52. Da eine äußerst kurze Exposition mit der Beschichtungsflamme genügt, ist nur ein mäßiger Temperaturanstieg zu erwarten.

In einer anderen Ausführungsform (erfindungsgemäß nur, wenn eine Silikatschicht aufgetragen wird) könnte mittels Plasmabeflammung oder Plasmapolymerisation eine dünne Polymerschicht auf das zweite Klebstoffmaterial 50 abgeschieden werden. Dieses Verfahren ist ein dem Pyrosil-Beflammen sehr ähnliches Verfahren mit noch geringerer thermischer Belastung.

Die Trennschicht 54 kann auch durch Bepudern mit einem Füllstoff hergestellt werden. Ein Sol-Gel-Prozess, PVD (Physical Vapour Deposition), CVD (Chemical Vapour Deposition), thermisches Spritzen oder Kaltgasspritzen können ebenfalls zum Aufbringen der Trennschicht vorgesehen sein.

Allgemein ist jedes Verfahren zur Abscheidung einer Dünnschicht von Polymer, Metall oder anorganischer Stoffe geeignet, sofern die thermische Belastung gering gehalten wird.

Das Fügematerial weist eine Vernetzungstemperatur auf, und die Trennschicht einen Schmelzpunkt, die kleiner als die Vernetzungstemperatur ist.

Das so hergestellte Befestigungselement (mit oder ohne Trennschicht) kann Monate lang bei Raumtemperatur gelagert werden und kann auch ohne Kühlkette bis zum Ort, an dem das Befestigungselement auf eine Trägerfläche eines Werkstücks wie ein Karosserieblech zu kleben ist, transportiert werden. Das Fügematerial 14 des Befestigungselements besteht vorzugsweise aus einem chemisch unvernetzten oder nicht vollständig chemisch vernetzten Klebstoff.

Um das Befestigungselement auf eine Trägerfläche eines Werkstücks wie ein Karosserieblech zu kleben, wird zuerst das Befestigungselement 10 auf der Trägerfläche 34 des Werkstücks 36 positioniert. Der Flanschabschnitt (bzw. das Fügematerial) wird gegen die Trägerfläche 34 angelegt. Das Fügematerial 14 wird durch Wärmebehandlung verflüssig und vollständig chemisch vernetzt. Die vollständige Haftfestigkeit des Fügematerials 14 durch spezifische Adhäsion wird während des Fügeverfahrens zum Werkstück 34 durch vollständige chemische Vernetzung des Klebstoffs aufgebaut. Die Erwärmung des Fügematerials kann durch Induktion, Ultraschall oder andere bekannte Erwärmungsmethoden erfolgen. Das Fügematerial kann direkt oder indirekt erwärmt werden. Das Fügebauteil 12 kann beispielsweise erwärmt sein und dieses erwärmt über Wärmeleitung das Fügematerial, das verflüssigt wird.

Verflüssigung durch Erwärmung des Fügematerials 14 kann auch durch eine Vorwärmung des Werkstücks erfolgen. Durch Aufsetzen des Fügematerials 14 auf ein über den Schmelzpunkt des Fügematerials 14 erwärmtes Werkstück 36 verflüssigt das Fügematerial 14 im Bereich der Grenzfläche (i.e. die Fläche, die direkt an der Trägerfläche ist). Die Werkstückerwärmung kann beispielsweise über einen Infrarot-Strahler erfolgen, aber andere Erwärmungsmethoden können auch vorgesehen sein. In einer anderen Ausführungsform kann beispielsweise eine Heizvorrichtung im Bereich der Befestigungselementaufnahme eingesetzt werden, um das Befestigungselement 10 zu erwärmen. Hierzu können beispielsweise ein Heizkörper, wie zum Beispiel eine Heizwendel, im Bereich des Flanschabschnitts 16 und/oder ein auf das Befestigungselement 10 gerichteter Infrarotstrahler eingesetzt werden. Ein Pyrometer kann vorgesehen sein, um die Temperatur zu regeln.

Die beiden geschmolzenen Klebstoffmaterialien können miteinander reagieren. Das Fügematerial kann sich dann gleichmäßig vermischen, so dass das erste und das zweite Klebstoffmaterial eine Klebstoffmatrix ausbilden. Das Fügematerial ist über die Vernetzungstemperatur erwärmt und eine beschleunigte Vernetzungsreaktion des Fügematerials erfolgt.

Zunächst wird sich die Trennschicht durch die Erwärmung des Fügematerials 14 auflösen. Dadurch werden die beiden Klebstoffmaterialien (beispielsweise Klebstoffhärter 50 und Klebstoffharz 52) in Kontakt sein und sich mischen.

## Patentansprüche

1. Befestigungselement (10), das mit einem Werkstück fügbar ist, mit:
- einem schaftförmigen Ankerabschnitt (18), der sich zwischen einer ersten und einer zweiten Endportion entlang einer Ankerachse (Xa) erstreckt, und
- einem quer dazu verlaufenden Flanschabschnitt (16), wobei der Flanschabschnitt (16) an der ersten Endportion des Ankerabschnitts (18) ausgebildet ist, wobei der Flanschabschnitt (16) mindestens teilweise einen Auftragungsabschnitt ausbildet,
- einem Fügematerial (14), wobei das Fügematerial (14) auf den Auftragungsabschnitt (28) vorappliziert ist, wobei das Fügematerial (14) mindestens teilweise in festem Zustand auf dem Auftragungsabschnitt (28) liegt,
wobei das Fügematerial (14) ein erstes Klebstoffmaterial (52) und ein zweites anderes Klebstoffmaterial (50) aufweist, wobei das erste Klebstoffmaterial (52) in festem Zustand liegt **dadurch gekennzeichnet, dass** das erste Klebstoffmaterial das zweite Klebstoffmaterial vollständig überdeckt, und das erste Klebstoffmaterial (52) und das zweite Klebstoffmaterial (50) durch eine Trennschicht (54) getrennt sind, wobei die Trennschicht (54) eine Silikatschicht ist.

2. Befestigungselement (10) nach Anspruch 1, wobei das zweite Klebstoffmaterial (50) flüssig und/oder pastös und/oder zäh ist.

3. Befestigungselement (10) nach einem der Ansprüche 1 - 2, wobei das erste Klebstoffmaterial (52) ein Klebstoffharz ist.

4. Befestigungselement (10) nach einem der Ansprüche 1 - 3, wobei das erste Klebstoffmaterial (52) ein Epoxidharz ist.

5. Befestigungselement (10) nach einem der Ansprüche 1 - 4, wobei das zweite Klebstoffmaterial (50) ein Klebstoffhärter ist.

6. Befestigungselement (10) nach einem der Ansprüche 1 - 4, wobei das zweite Klebstoffmaterial (50) ein Beschleuniger ist.

7. Befestigungselement (10) einem der Ansprüche 1 - 6, wobei das Fügematerial eine Vernetzungstemperatur und die Trennschicht einen Schmelzpunkt aufweisen, wobei der Schmelzpunkt tiefer als die Vernetzungstemperatur ist.

8. Befestigungselement (10) nach einem der Ansprüche 1 - 7, wobei das Fügematerial einen kreisförmigen Fügematerialstrang mit einer Innenwand ausbildet, die eine zentrale Öffnung begrenzt.

9. Verfahren zum Herstellen eines Befestigungselement (10), nach einem der Ansprüche 1 - 8, mit den Schritten:
- Bereitstellen eines Verbundbauteils mit einem schaftförmigen Ankerabschnitt (18), der sich zwischen einer ersten und einer zweiten Endportion entlang einer Ankerachse (Xa) erstreckt, und einem quer dazu verlaufenden Flanschabschnitt (16), wobei der Flanschabschnitt (16) an der ersten Endportion des Ankerabschnitts (18) ausgebildet ist, wobei der Flanschabschnitt (16) mindestens teilweise einen Auftragungsabschnitt ausbildet,
- Auftragen eines erwärmten zweiten Klebstoffmaterials auf wenigstens den Auftragungsabschnitt,
- Auftragen eines erwärmten ersten Klebstoffmaterials (52) auf wenigstens das zweiten Klebstoffmaterial (50), so dass das erste Klebstoffmaterial das zweite Klebstoffmaterial vollständigt überdeckt und wobei das erste Klebstoffmaterial (52) in festem Zustand liegt,
wobei eine Trennschicht (54) auf das zweite Klebstoffmaterial (52) aufgetragen wird, bevor das erwärmte erste Klebstoffmaterial aufgetragen wird, und wobei die Trennschicht (54) durch Beflammung mit Siliziumdioxid aufgetragen wird.

10. Verfahren nach Anspruch 9, mit dem Schritt Abkühlen des Fügematerials, bis das erste Klebstoffmaterial (52) fest ist.

## Claims

1. Fastener (10) adapted be joined to a workpiece, having:
- a shaft-shaped anchor section (18) that extends along an anchor axis (Xa) between a first and a second end portion, and
- a flange section (16) running transversely thereto, wherein the flange section (16) is formed on the first end portion of the anchor section (18), wherein the flange section (16) at least partially forms an application section,
- a joining material (14), wherein the joining material (14) is pre-applied to the application section (28), wherein the joining material (14) at least partially lies on the application section (28) in the solid state,
wherein the joining material (14) has a first adhesive material (52) and a second different adhesive material (50), wherein the first adhesive material (52) is in a solid state, **characterized in that** the first adhesive material completely covers the second adhesive material and the first adhesive material (52) and the second adhesive material (50) are separated by a separating layer (54), wherein the separating layer (54) is a silicate layer.

2. Fastener (10) according to claim 1, wherein the second adhesive material (50) is liquid and/or paste-like and/or rigid.

3. Fastener (10) according to one of claims 1-2, wherein the first adhesive material (52) is an adhesive resin.

4. Fastener (10) according to one of claims 1-3, wherein the first adhesive material (52) is an epoxy resin.

5. Fastener (10) according to one of claims 1-4, wherein the second adhesive material (50) is an adhesive curing agent.

6. Fastener (10) according to one of claims 1-4, wherein the second adhesive material (50) is an accelerant.

7. Fastener (10) according to any of claims 1 to 6, wherein the joining material has a crosslinking temperature and the separating layer has a melting point, wherein the melting point is lower than the crosslinking temperature.

8. Fastener (10) according to one of claims 1-7, wherein the joining material forms a circular joining material strand having an inner wall which limits a central opening.

9. Method for producing a fastener (10) according to one of claims 1-8, having the following steps:
- providing a composite component having a shaft-shaped anchor section (18) that extends along an anchor axis (Xa) between a first and a second end portion, and a flange section (16) running transversely thereto, wherein the flange section (16) is formed on the first end portion of the anchor section (18), wherein the flange section (16) at least partially forms an application section,
- applying a heated second adhesive material to at least the application section,
- applying a heated first adhesive material (52) to at least the second adhesive material (50), such that the first adhesive material completely covers the second adhesive material, and wherein the first adhesive material (52) is in a solid state,
wherein a separating layer (54) is applied to the second adhesive material (52) before the heated first adhesive material is applied, and
wherein the separating layer (54) is applied by means of flame treatment by silicon dioxide.

10. Method according to claim 9, having the step of cooling the joining material down until the first adhesive material (52) is solid.

## Revendications

1. Élément de fixation (10) qui peut être joint à une pièce à usiner, avec :
- une section d'ancrage (18) en forme de tige qui s'étend entre une première et une seconde portion d'extrémité le long d'un axe d'ancrage (Xa), et
- une section de bride (16) s'étendant transversalement à celle-ci, dans lequel la section de bride (16) est réalisée au niveau de la première portion d'extrémité de la section d'ancrage (18), dans lequel la section de bride (16) réalise au moins partiellement une section d'application,
- un matériau de joint (14), dans lequel le matériau de joint (14) est préappliqué sur la section d'application (28), dans lequel le matériau de joint (14) se trouve au moins partiellement dans l'état solide sur la section d'application (28),
dans lequel le matériau de joint (14) présente un premier matériau de colle (52) et un second autre matériau de colle (50), dans lequel le premier matériau de colle (52) se trouve dans l'état solide, **caractérisé en ce que** le premier matériau de colle recouvre complètement le second matériau de colle, et le premier matériau de colle (52) et le second matériau de colle (50) sont séparés par une couche de séparation (54), dans lequel la couche de séparation (54) est une couche de silicate.

2. Élément de fixation (10) selon la revendication 1, dans lequel le second matériau de colle (50) est liquide et/ou pâteux et/ou visqueux.

3. Élément de fixation (10) selon l'une des revendications 1 à 2, dans lequel le premier matériau de colle (52) est une résine de colle.

4. Élément de fixation (10) selon l'une des revendications 1 à 3, dans lequel le premier matériau de colle (52) est une résine époxy.

5. Élément de fixation (10) selon l'une des revendications 1 à 4, dans lequel le second matériau de colle (50) est un durcisseur de colle.

6. Élément de fixation (10) selon l'une des revendications 1 à 4, dans lequel le second matériau de colle (50) est un accélérateur.

7. Élément de fixation (10) selon l'une des revendications 1 à 6, dans lequel le matériau de joint présente une température de réticulation et la couche de séparation présente un point de fusion, dans lequel le point de fusion est plus bas que la température de réticulation.

8. Élément de fixation (10) selon l'une des revendications 1 à 7, dans lequel le matériau de joint réalise un brin de matériau de joint circulaire, avec une paroi intérieure qui délimite une ouverture centrale.

9. Procédé de fabrication d'un élément de fixation (10) selon l'une des revendications 1 à 8, avec les étapes :
- la mise à disposition d'une pièce composite avec une section d'ancrage (18) en forme de tige, qui s'étend entre une première et une seconde portion d'extrémité le long d'un axe d'ancrage (Xa), et une section de bride (16) s'étendant transversalement à celle-ci, dans lequel la section de bride (16) est réalisée au niveau de la première portion d'extrémité de la section d'ancrage (18), dans lequel la section de bride (16) réalise au moins partiellement une section d'application,
- l'application d'un second matériau de colle chauffé sur au moins la section d'application,
- l'application d'un premier matériau de colle (52) chauffé sur au moins le second matériau de colle (50) de sorte que le premier matériau de colle recouvre complètement le second matériau de colle et dans lequel le premier matériau de colle (52) se trouve dans l'état solide,
dans lequel une couche de séparation (54) est appliquée sur le second matériau de colle (52), avant que le premier matériau de colle chauffé ne soit appliqué, et dans lequel la couche de séparation (54) est appliquée par flambage avec du dioxyde de silicium.

10. Procédé selon la revendication 9, avec l'étape de refroidissement du matériau de joint jusqu'à ce que le premier matériau de colle (52) soit solide.
